# EUROPEAN PATENT APPLICATION

(11) **EP 0 663 147 A1**
(43) Date of publication of application: **19.07.1995**
(21) Application number: 94919878.2
(22) Date of filing: 08.07.1994
(51) Int. Cl.: A01N 37/02

(54) **FATTY ACID INSECTICIDE AND INSECTICIDAL METHOD USING THE SAME**

(30) Priority: 22.07.1993 JP 181690/93
(71) Applicant: JAPAN TOBACCO INC., Shinagawa-ku, Tokyo 140 (JP)
(72) Inventor: IMAI, Toshihiro, Japan Tobacco Inc. Applied Plant, Midori-ku, Yokohama-shi, Kanagawa 227 (JP); TSUCHIYA, Satoshi Japan Tobacco Inc Applied Plant, Midori-ku, Yokohama-shi, Kanagawa 227 (JP); MORITA, Kenji, Japan Tobacco Inc. Applied Plant, Midori-ku, Yokohama-shi, Kanagawa 227 (JP); FUJIMORI, Takane Japan Tobacco Inc. Applied Plant, Midori-ku, Yokohama-shi, Kanagawa 227 (JP)
(74) Representative: Reinhard, Horst, Dr.
(86) International application number: JP9401123
(87) International publication number: WO9502961

(57) **Abstract**

An insecticide excellent in safety and economy, which contains as the active ingredients a C₈-C₂₀ fatty acid having an α -carboxyl group or a salt thereof, and a surfactant, a salt of a monovalent metal which can increase surface activity or a water-retentive substance.

## Description

### Technical Field

The present invention relates to a fatty acid insecticide and a process for controlling insects using the insecticide. The term "insecticide" used herein means an agent for use in the control of not only insects but also land arthropods in general.

### Background Art

An insecticide utilizing a fatty acid, a natural product, has extremely excellent properties compared to conventional chemical insecticides. For example, a fatty acid insecticide is of extremely low toxicity against vertebrates; it is low in persistence since it is easy to decompose; and it does not cause resistance in target mites, insects, etc. However, an insecticide using a monovalent metal salt of fatty acid has a disadvantage. When it is diluted with hard water, it bonds to metals therein to produce scum, and this results in reduced insecticidal effect. It is known to add to a fatty acid insecticide various chelate compounds as adjuvants in order to cover such disadvantage (International Publication No. WO89/10693). Based on this improvement, Safer Inc. in the United States is selling an insecticide comprising potassium oleate as the active ingredient.

However, even if such an improving agent is used, it is necessary to make the concentration of a fatty acid as high as 1% per liquid formulation in order for the insecticide to achieve high control effect. This makes control expenses with this type insecticide higher than those with a common insecticide. Therefore, in spite of the above-mentioned advantages, use of a fatty acid-type insecticide in ordinary crops is limited due to economical reasons.

### Problem for Solution by the Invention

The present inventors have investigated into the development mechanism of the insecticidal effect of a fatty acid insecticide, and found that its insecticidal effect is deeply related with the wettability of the applied insecticide solution on the body surface of target insects as well as the duration of the state of wetness.

### Disclosure of the Invention

As a result of intensive and extensive researches based on the above finding, the present inventors have found that a surfactant, a monovalent metal salt having an action of enhancing surface activity or a moisture-retaining substance remarkably improves the insecticidal activity of fatty acids. The present invention has been thus achieved.

In the first aspect of the present invention, there is provided an insecticide comprising, as active ingredients, a fatty acid having an α -carboxyl group and from 8 to 20 carbon atoms or a salt thereof and a surfactant. For examples of the surfactant to be used here, side-chain-modified or terminal-modified polydimethylsiloxane surfactants may be enumerated.

In the second aspect of the present invention, there is provided an insecticide comprising, as active ingredients, a fatty acid having an α -carboxyl group and from 8 to 20 carbon atoms or a salt thereof and a monovalent metal salt having an action of enhancing surface activity. For examples of the monovalent metal salt having an action of enhancing surface activity to be used here, sodium sulfate, potassium acetate, etc. may be enumerated.

In the third aspect of the present invention, there is provided an insecticide comprising, as active ingredients, a fatty acid having an α -carboxyl group and from 8 to 20 carbon atoms or a salt thereof and a moisture-retaining substance. For examples of the moisture-retaining substance to be used here, polysaccharides, hydrolysates thereof, etherified products thereof, viscous, synthetic water-soluble polymers, viscouse polymers from animals, mucopolysaccharides and sodium pyrrolidonecarboxylate may be enumerated. More specifically, sodium polyacrylate, polyethylele imine, polyvinyl alcohol, polyethylene oxide, polyvinyl pyrrolidone, casein, gelatin, sodium pyrrolidonecarboxylate, hyaluronic acid, sodium carboxymethyl cellulose, sodium hydroxyethyl cellulose, sodium chondroitin sulfate, carragheenan, xanthan gum and sodium alginate may be enumerated.

As to the above-mentioned fatty acid having an α -carboxyl group and from 8 to 20 carbon atoms, a saturated fatty acid with 8 - 12 carbon atoms, an unsaturated fatty acid with 18 carbon atoms or the like may be used.

In the fourth aspect of the present invention, there is provided a method for controlling insects using the above-mentioned insecticide.

Now the present invention will be described in detail.

As to the fatty acid to be used in the present invention, there is no particular limitation as long as it has an α -carboxyl group and from 8 to 20 carbon atoms; either a saturated or an unsaturated fatty acid may be used. In addition, not only a fatty acid itself but also a salt thereof may be used. Among these fatty acids, preferable saturated fatty acids are those having from 8 to 12 carbon atoms, such as caprylic acid, capric acid and lauric acid. Preferable unsaturated fatty acids are those having 18 carbon atoms, such as oleic acid and linolic acid. With respect to the content of such a fatty acid, it is preferred that the content be as small as possible from the viewpoint of cost. However, if the content is too small, sufficient effect cannot be produced. Therefore, it is suitable to make the content 0.1 - 1% in the final concentration of an insecticide solution.

As to the surfactant, those surfactants which are 25 dyn/cm or less in surface tension, such as side-chain-modified or terminal-modified polydimethylsiloxane surfactants, may be used. With respect to the content of such a surfactant, it is suitable to make the content 0.01 - 1%, preferably 0.03 - 0.3% in the final concentration of an insecticide solution.

The above-mentioned monovalent metal salt having an action of enhancing surface activity is the so-called "builder" used in detergents, etc. Like surfactants, no special builders are required in the present invention; a conventional builder may be used. For concrete examples, sodium sulfate, potassium acetate, etc. may be enumerated. With respect to the content of such a metal salt, it is suitable to make the content 0.01 - 5%, preperably 0.05 - 2% in the final concentration of an insecticide solution.

As to the moisture-retaining substance, polysaccharides such as carragheenan and xanthan gum; hydrolysates of polysaccharides such as sodium alginate; etherified products of polysaccharides such as sodium carboxymethyl cellulose and sodium hydroxyethyl cellulose; viscous, synthetic water-soluble polymers such as sodium polyacrylate, polyethylele imine, polyvinyl alcohol, polyethylene oxide and polyvinyl pyrrolidone; viscous polymer from animals such as sodium chondroitin sulfate, casein and gelatin; mucopolysaccharides such as hyaluronic acid; and sodium pyrrolidonecarboxyl ate may be enumerated. With respect to the content of such a moisture-retaining substance, the content may be in the range under which a wet condition can last on the body surface of insect pects. For example, it is suitable to make the content 0.1 - 3%, preferably 0.3 - 1% for sodium pyrrolidonecarboxylate, sodium carboxymethyl cellulose and sodium chondroitin sulfate; and 0.01 - 0.3%, preferably 0.03 - 0.1% for carragheenan, xanthan gum, sodium polyacrylate and sodium alginate.

The insecticide of the present invention is prepared by adding to the above-mentioned fatty acid a surfactant, a monovalent metal salt having an action of enhancing surface activity or a moisture-retaining substance and further adding thereto a solvent, such as water, and additives. By the way, as to the above-mentioned surfactant, monovalent metal salt having an action of enhancing surface activity or moisture-retaining substance, one substance may be selected and used, or two or more substances in one of these three categories may be selected and used in mixture.

The insecticide of the present invention is usually used as a liquid formulation. In the actual application to a farm, the insecticide of the present invention is diluted with water to 100 - 200-fold, and then sprayed on a farm to be protected from insect pects. The suitable amount of application is 50 - 250 g (in active ingredient) per are, but the amount is not limited within this range.

As to the target life of the insecticide of the present invention, red spider, aphid, etc. may be enumerated. However, the insecticide of the present invention is widely applicable to land arthropods in general.

### Best Mode for Carrying Out the Invention

Now the present invention will be described in more detail with reference to Examples, which should not be construed as limiting the technical scope of the present invention.

### (Example 1)

### Effect against Green Peach Aphid

Japanese radish seedlings were grown in glass tubes 3 cm in diameter and 10 cm in height. Against the colonies (30-50 individuals/colony) of green peach aphids (*Myzus persicae*) feeding on the seedlings (at the true leaf 2-leaf stage), 2 ml of an insecticide solution was sprayed per seedling with a glass atomizer. After the application, seedlings were kept at 25 °C under 60% humidity for 16 hours. Then, the death of aphids was evaluated. The insecticide solution was prepared by diluting an insecticide with distilled water to give specific concentrations of potassium oleate and additives. With respect to additives, carboxymethyl cellulose, sodium polyacrylate and xanthan gum were used as moisture-retaining substances; sodium sulfate and potassium acetate were used as monovalent metal salts having an action of enhancing surface activity; and Silwet L-77 and Silwet L-7607N were used as surfactants.

Experiment was repeated twice for each plot. As shown in Table 1, it was found that, in those plots with additives, practical control effect can be obtained even if the concentration of potassium oleate is 0.3%, whereas the concentration of potassium oleate which produces practical control effect is 1% based on the total weight of the liquid solution when potassium oleate is used alone. Thus, an effect of 70% dose reduction has been proved.

**Table 1**

| Effect against Green Peach Aphid (Mean Mortality) | | | | | |
|---|---|---|---|---|---|
| Additives | | Active ingredient (Potassium Oleate) | | | |
| | | 0% | 1% | 0.3% | 0.1% |
| None | | | 84.1 | 58.3 | 12.3 |
| Sodium carboxymethyl cellulose | 1% | 0 | 85.8 | 81.7 | 64.9 |
| Sodium polyacrylate | 0.1% | 0 | 87.1 | 88.3 | 45.5 |
| Xanthan gum | 0.1% | 0 | 80.7 | 91.1 | 78.4 |
| Sodium sulfate | 1% | 0 | 80.0 | 65.5 | 45.2 |
| Potassium acetate | 1% | 4.2 | 88.5 | 79.0 | 39.7 |
| Silwet L-77 | 0.1% | 35.5 | 75.5 | 83.0 | 56.5 |
| Silwet L-7607N | 0.03% | 15.7 | 91.6 | 70.6 | 58.7 |
| Sodium alginate | 0.1% | 0 | 83.8 | 68.2 | 29.3 |
| Sodium pyrrolidonecarboxylate | 1% | 0.5 | 89.9 | 70.5 | 29.9 |
| Sodium chondroitinsulfate | 1% | 0 | 86.5 | 81.2 | 29.5 |
| Silwet L-77 and L-7607N are silicon surfactants produced by Union Carbide Chemicals and Plastics Co., Ltd. | | | | | |

### (Example 2)

### Effect against Two-Spotted Spider Mite

Against two-spotted spider mite (*Tetranychus urticae*) (presumed number of individuals: 100 - 300/plant) on kidney bean (top crop) at the true leaf 2-leaf stage, 5 ml of an insecticide solution was sprayed per plant with a hand-grip sprayer. With respect to additives, sodium polyacrylate was used as a moisture-retaining substance; sodium acetate was used as a monovalent metal salt having an action of enhancing surface activity; and Silwet L-77 was used as a surfactant.

After the application, plants were left in a glass greenhouse (at 25 °C ) for 7 days, and then the mites adhering to the small leaf piece of the second true leaf were counted. This experiment was repeated 4 times. The results are shown in Table 2. In plots with additives, the effect produced at a potassium oleate concentration of 0.3% was equivalent to that produced at 1% concentration in non-additive plot. Thus, an effect of 70% dose reduction has been proved.

**Table 2**

| Effect against Two-Spotted Spider Mite (No. of survived mites per cm² of leaf surface) | | | |
|---|---|---|---|
| Agents | Adult mites | Eggs + larvae | Total |
| Potassium oleate 1% | 0.8 | 1.5 | 2.3 |
| Potassium oleate 0.3% | 1.2 | 7.1 | 8.3 |
| Potassium oleate 0.3% + Sodium polyacrylate 0.1% | 0.4 | 0.6 | 1.0 |
| Potassium oleate 0.3% + Sodium acetate 0.3% | 1.0 | 2.7 | 3.7 |
| Potassium oleate 0.3% + Silwet L-77 0.1% | 0.6 | 1.9 | 2.5 |
| Distilled water | 2.0 | 25.3 | 27.3 |

### (Example 3)

### Effect against Green Peach Aphid

A liquid formulation (whose composition is shown in Table 3) comprising as active ingredients a mixture of potassium caprate and capric acid was prepared and diluted with distilled water. Then, one of the following three substances was added thereto: sodium carboxymethyl cellulose as a moisture-retaining substance, sodium acetate as a monovalent metal salt having an action of enhancing surface activity or Silwet L-77 as a surfactant. These liquid formulations thus prepared were supplied to an insecticidal test similar to Example 1 against green peach aphid.

The test was repeated 4 times. The results are shown in Table 4. In those plots with additives, the effect produced at a concentration of 0.4% of the potassium caprate/capric acid mixture was superior to the effect produced at a concentration of 1.2% in non-additive plot. Thus, an effect of 70% dose reduction has been proved.

**Table 3**

| Composition of the Liquid Formulation | |
|---|---|
| Components | % |
| Potassium caprate | 46.5 |
| Capric acid | 4.1 |
| Propylene glycol | 30.9 |
| Water | 18.5 |

**Table 4**

| Effect against Green Peach Aphid | | |
|---|---|---|
| Treatment plot | | Mean mortality(%) |
| Potassium caprate · Capric acid | 1.2% | 71.8 |
| Potassium caprate · Capric acid | 0.4% | 54.8 |
| Potassium caprate · Capric acid | 0.4% | |
| + Sodium carboxymethyl cellulose | 0.1% | 92.6 |
| Potassium caprate · Capric acid | 0.4% | |
| + Potassium acetate | 1% | 87.2 |
| Potassium caprate · Capric acid | 0.4% | |
| + Silwet L-77 | 0.1% | 78.5 |

### Application Example

A formulation (whose composition is shown in Table 5) comprising potassium oleate as the active ingredient was prepared and diluted with tap water to 150-fold. Then, 0.5 g/liter of sodium acrylate (for use as a food additive) was added thereto and dissolved under stirring. This liquid formulation was sprayed with a sprayer at a concentration of 300 liters/10 ares over cucumber plants (4 leaves) which had been grown in a rain-protection house in ridges 150 cm in width at an interval of 50 cm between plants. As a control plot, an ethanol solution of 40% potassium oleate was diluted to 50-fold and applied to cucumber plants in the same manner. With respect to the judgement of effect, the total number of cotton aphid (*Aphis gossypii*) on a specific leaf marked in advance was counted.

For each plot, test was repeated 5 times and an average value was calculated. The results are shown in Table 6. The insecticide of the present invention whose active ingredient was one third in quantity compared to the control insecticide exhibited superior effect to that of the control insecticide using potassium oleate alone.

**Table 5**

| Composition of a Liquid Formulation | |
|---|---|
| Components | % |
| Potassium oleate | 40 |
| Propylene glycol | 55 |
| Distilled water | 5 |

**Table 6**

| Effect against Cotton Aphid (No. of aphids per leaf) | | |
|---|---|---|
| | Before treatment | One day after treatment |
| Treatment plot (potassium oleate 0.23%) | 131.2 (aphids) | 14.8 (aphids) |
| Non-treatment plot | 108.4 | 121.1 |
| Control plot (potassium oleate 0.8%) | 121.0 | 22.7 |

### Effect of the Invention

According to the present invention, it has become possible to reduce the fatty acid content in a fatty acid insecticide. Thus, it becomes possible to supply a highly safe insecticide at a low cost.

## Claims

1. An insecticide comprising as acticve ingredients a fatty acid having an α -carboxyl group and from 8 to 20 carbon atoms or a salt thereof and a surfactant.

2. The insecticide according to claim 1, wherein said surfactant is a side-chain-modified or terminal-modified polydimethylsiloxane surfactant.

3. An insecticide comprising as acticve ingredients a fatty acid having an α -carboxyl group and from 8 to 20 carbon atoms or a salt thereof and a monovalent metal salt having an action of enhancing surface activity.

4. The insecticide according to claim 3, wherein said monovalent metal salt having an action of enhancing surface activity is sodium sulfate or potassium acetate.

5. An insecticide comprising as acticve ingredients a fatty acid having an α -carboxyl group and from 8 to 20 carbon atoms or a salt thereof and a moisture-retaining substance.

6. The insecticide according to claim 5, wherein said moisture-retaining substance is a polysaccharide, an oxide thereof, a hydrolysate thereof, an etherified product thereof, a viscous, synthetic water-soluble polymer, a viscous polymer from animals, a mucopolysaccharide or sodium pyrrolidonecarboxylate.

7. The insecticide according to claim 5, wherein said moisture-retaining substance is sodium polyacrylate, polyethylele imine, polyvinyl alcohol, polyethylene oxide, polyvinyl pyrrolidone, casein, gelatin, sodium pyrrolidonecarboxylate, hyaluronic acid, sodium carboxymethyl cellulose, sodium hydroxyethyl cellulose, sodium chondroitin sulfate, carragheenan, xanthan gum or sodium alginate.

8. The insecticide according to any one of claims 1 to 7, wherein said fatty acid having an α -carboxyl group and from 8 to 20 carbon atoms or a salt thereof is a saturated fatty acid having from 8 to 12 carbon atoms or a salt thereof.

9. The insecticide according to any one of claims 1 to 7, wherein said fatty acid having an α -carboxyl group and from 8 to 20 carbon atoms or a salt thereof is an unsaturated fatty acid having 18 carbon atoms or a salt thereof.

10. A process for controlling insects comprising using the insecticide according to any one of claims 1 to 9.
